# EUROPÄISCHE PATENTSCHRIFT

(11) **EP 2 672 161 B1**
(45) Veröffentlichungstag und Bekanntmachung des Hinweises auf die Patenterteilung: **05.11.2014**
(21) Anmeldenummer: 13183345.1
(22) Anmeldetag: 01.04.2011
(51) Int. Cl.: F16L 37/32

(54) **Schnellkupplung für "Hydraulik-Druckleitungen"**
Quick coupling for hydraulic pressure conduits
Raccordement rapide pour conduits sous pression hydraulique

(43) Veröffentlichungstag der Anmeldung: 11.12.2013
(62) Teilanmeldung aus: 11160881.6
(73) Patentinhaber: Voswinkel Entwicklungs- und Verwaltungs-GmbH & Co. KG, 58540 Meinerzhagen (DE)
(72) Erfinder: Hartmann, Jürgen, 58339 Breckerfeld (DE)
(74) Vertreter: Patentanwälte Dr. Solf & Zapf

(56) Entgegenhaltungen:
- EP-A2- 0 478 495
- EP-A2- 1 355 100
- CN-A- 101 666 403
- DE-A1- 3 509 371
- DE-A1- 10 349 299
- DE-C1- 19 624 365
- DE-U1- 9 422 115
- GB-A- 2 412 956
- US-A- 3 348 575
- US-A- 3 525 361
- US-A1- 2010 034 580

## Beschreibung

Die vorliegende Erfindung betrifft eine Schnellkupplung für Hydraulik-Druckleitungen, bestehend aus zwei Kupplungsteilen, und zwar einem Steckerteil und einem Muffenteil, wobei das Steckerteil mit einem Steckerschaft unter umfangsgemäßer Abdichtung in Richtung einer Kupplungsachse in eine Aufnahmeöffnung des Muffenteils einsteckbar ist und die Kupplungsteile in der zusammengesteckten Kupplungslage über Verriegelungsmittel lösbar verriegelbar sind, wobei jedes Kupplungsteil innerhalb eines Gehäuses und eines inneren, durch das Gehäuse verlaufenden Strömungskanals ein Schließventil mit einer durch Federkraft erzeugten Schließlage aufweist, wobei jedes Schließventil aus einem axial beweglichen, eine Ringdichtung aufweisenden Ventilkörper und einem gehäuseseitigen, eine Strömungsöffnung umschließenden Ventilsitz für die Ventil-Ringdichtung besteht, und wobei sich beim Kuppeln der Kupplungsteile deren Ventilkörper gegenüberliegen und derart über axiale Ansätze zur Anlage aneinander gelangen, dass sich die Schließventile beim Kuppeln selbsttätig gegenseitig öffnen, indem die Ventilkörper aus ihrer Schließlage gegen die Federkraft axial in das jeweilige Gehäuse hinein in eine die jeweilige Strömungsöffnung öffnende Öffnungslage verschoben werden.

Solche Hydraulik-Schnellkupplungen sind in unterschiedlichen Ausgestaltungen aus zahlreichen Veröffentlichungen bekannt. Lediglich beispielhaft sei hier auf das Dokument DE 35 09 371 A1 verwiesen. Bei der darin beschriebenen Hydraulik-Kupplung handelt es sich allerdings um eine spezielle Ausgestaltungen, die ein Steckkuppeln auch dann ermöglicht, wenn das eine Kupplungsteil noch unter einem druck-nehmerseitigen Restdruck steht; es handelt sich folglich um eine so genannte UDK-Ausführung (UDK = unter Druck kuppelbar). Solche bekannten Schnellkupplungen haben sich in der Praxis gut bewährt und werden für viele Anwendungen eingesetzt, um Hydraulikleitungen schnell und einfach verbinden und trennen zu können, wobei im getrennten Zustand durch die Schließventile Leckagen vermieden werden.

Nun gibt es in der Hydrauliktechnik auch Fälle, wobei sehr hohe Druckwerte von 500 bar und mehr und in Kombination damit auch starke Hydraulikströmungen von mindestens 600 l/min sowie Druckpulsationen auftreten. Dies ist beispielsweise bei Abbruchbaggern zum hydraulischen Antrieb von Brechzangen der Fall. Für solche Anwendungen wurden in den Hydraulikleitungen bislang keine Schnellkupplungen mit integrierten Schließventilen der oben beschriebenen Art eingesetzt, sondern beidseitig jeder Trennstelle Kugelabsperrhähne. Dies führt aber zu einem recht großen Bauteilaufwand und zu umständlichen Trenn- und Kuppelvorgängen.

Eine Schnellkupplung der beschriebenen, gattungsgemäßen Art wäre für den speziellen Anwendungsfall nicht geeignet. Einerseits könnten die an den kegeligen Ventilkörpern in Dichtungskammern sitzenden elastischen Ringdichtungen bei starken Hydraulikströmungen beschädigt oder sogar herausgerissen, d. h. "ausgewaschen" werden, und Druckpulsationen könnten zu unkontrollierten axialen Ventilbewegungen (Flatterbewegungen) führen. Andererseits sind bisher üblicherweise die Verriegelungsmittel als so genannte Sperrkugelverriegelung ausgebildet, was ebenfalls eine Verwendung nur bis zu einem bestimmten Maximaldruck gestattet.

Der vorliegenden Erfindung liegt daher die Aufgabe zu Grunde, eine Schnellkupplung der eingangs beschriebenen, gattungsgemäßen Art zu schaffen, die sich auch für Anwendungen mit hohen Drücken, Druckpulsationen und starken Hydraulikströmungen eignet.

Gemäß dem kennzeichnenden Teil des Anspruch 1 liegt die Erfindung darin, dass die Verriegelungsmittel als äußere Verschraubung ausgebildet sind, wobei das eine Kupplungsteil, insbesondere das Steckerteil, eine äußere, drehbare Überwurf-Schraubhülse trägt, die mit einem Innengewinde auf ein Außengewinde des anderen Kupplungsteils, insbesondere des Muffenteils, aufschraubbar ist, wobei die Gewinde als Rechteck- oder Trapezgewinde ausgebildet sind, und wobei innerhalb der Schraubhülse im Übergang von dem Innengewinde zu einem radial nach innen vorspringenden und mit einem Stufenansatz des Kupplungsteils zur Krafteinleitung zusammenwirkenden Ringbund ein schräger, konusartiger Verstärkungsbereich gebildet ist.

Durch diese erfindungsgemäße Ausgestaltung sind die Verriegelungsmittel für eine sehr hohe Haltekraft ausgelegt, so dass sie im Betrieb hohen Drücken und starken Druckpulsationen Stand halten können, ohne dass Schäden oder gar ein Trennen der Kupplungsteile zu befürchten wäre.

Weitere vorteilhafte Ausgestaltungsmerkmale der Erfindung sind in den abhängigen Ansprüchen und der anschließenden Beschreibung enthalten.

Anhand der Zeichnung und darin veranschaulichter, bevorzugter Ausführungsbeispiele soll die Erfindung im Folgenden genauer erläutert werden. Es zeigen:
- Fig. 1: eine erfindungsgemäße Schnellkupplung in einer ersten Ausführungsform im Axialschnitt und in der steckgekuppelten und verriegelten Kupplungslage mit geöffneten Schließventilen,
- Fig. 2: eine Ausschnittvergrößerung des Bereiches II in Fig. 1,
- Fig. 3: die Schnellkupplung gemäß Fig. 1 in einem getrennten, entkuppelten Zustand der beiden Kupplungsteile mit geschlossenen Schließventilen, und zwar

- Fig. 3a: das Steckerteil im Halb-Axialschnitt und
- Fig. 3b: das Muffenteil im Axialschnitt,
- Fig. 4: eine Ausschnittvergrößerung des Bereiches IV in Fig. 3b im Dichtungsbereich des geschlossenen Schließventils,
- Fig. 5: eine Darstellung des Muffenteils analog zu Fig. 3b in einem Zustand während des Öffnens des Schließventils,
- Fig. 6: eine Ausschnittvergrößerung des Bereiches VI in Fig. 5 analog zu Fig. 4,
- Fig. 7: eine weitere Ansicht wie in Fig. 3b und Fig. 5 in der ganz geöffneten Stellung des Schließventils,
- Fig. 8: eine Ausschnittvergrößerung des Bereiches VIII in Fig. 7 analog zu Fig. 4 und 6,
- Fig. 9: eine Ausschnittvergrößerung des Bereiches IX in Fig. 2 und 7 in einer vorteilhaften Ausgestaltung,
- Fig. 10: eine gesonderte Darstellung eines flanschartigen Anschlagelementes im Halb-Axialschnitt,
- Fig. 11: eine Ausschnittvergrößerung des Bereiches XI in Fig. 10,
- Fig. 12: eine Darstellung der Schnellkupplung analog zu Fig. 1 in einer alternativen Ausgestaltung,
- Fig. 13: eine Ausschnittvergrößerung des Bereiches XIII in Fig. 12,
- Fig. 14: eine teilgeschnittene Seitenansicht des Steckerteils zur Erläuterung der Verriegelungsmittel,
- Fig. 15: eine Ausschnittvergrößerung des Bereiches XV in Fig. 14,
- Fig. 16: eine halb axial geschnittene Seitenansicht einer Überwurf-Schraubhülse der erfindungsgemäßen Verriegelungsmittel und
- Fig. 17: eine Ausschnittvergrößerung des Bereiches XVII in Fig. 16.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

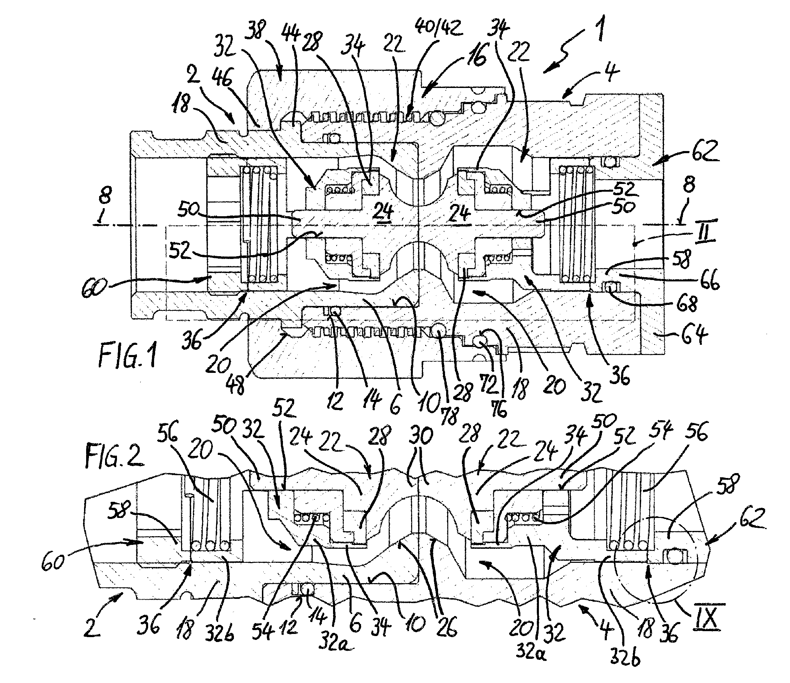

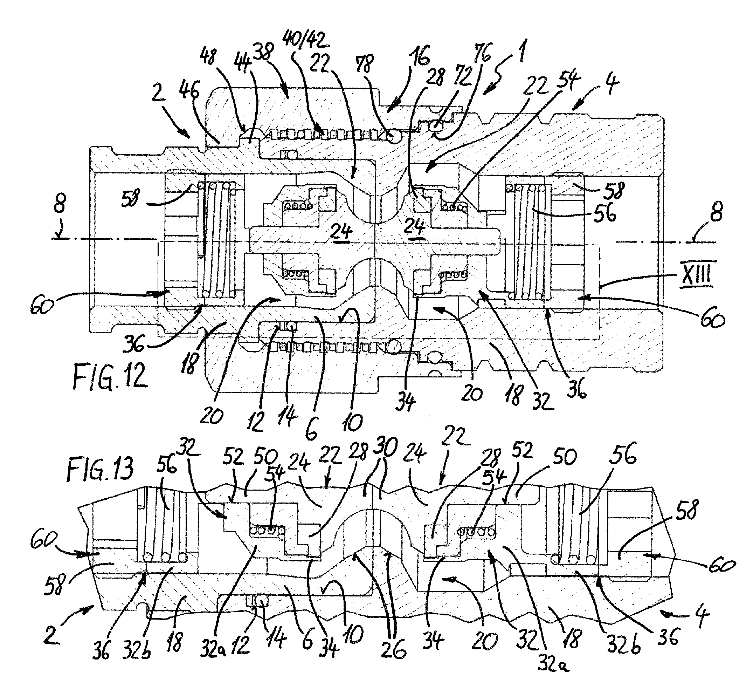

Wie sich zunächst aus Fig. 1 und 12 jeweils ergibt, besteht eine erfindungsgemäße Schnellkupplung 1 aus zwei zusammensteckbaren Kupplungsteilen, und zwar einem Steckerteil 2 und einem Muffenteil 4. Das Steckerteil 2 ist mit einem Steckerschaft 6 unter umfangsgemäßer Abdichtung in Richtung einer Kupplungsachse 8 in eine Aufnahmeöffnung 10 des Muffenteils 4 einsteckbar. Zur umfangsgemäßen Abdichtung ist innerhalb der Aufnahmeöffnung 10 des Muffenteils 4 in einer inneren Ringnut 12 eine Umfangsdichtung 14 angeordnet. In der zusammengesteckten Kupplungslage sind die beiden Kupplungsteile 2, 4 über Verriegelungsmittel 16 lösbar verriegelbar.

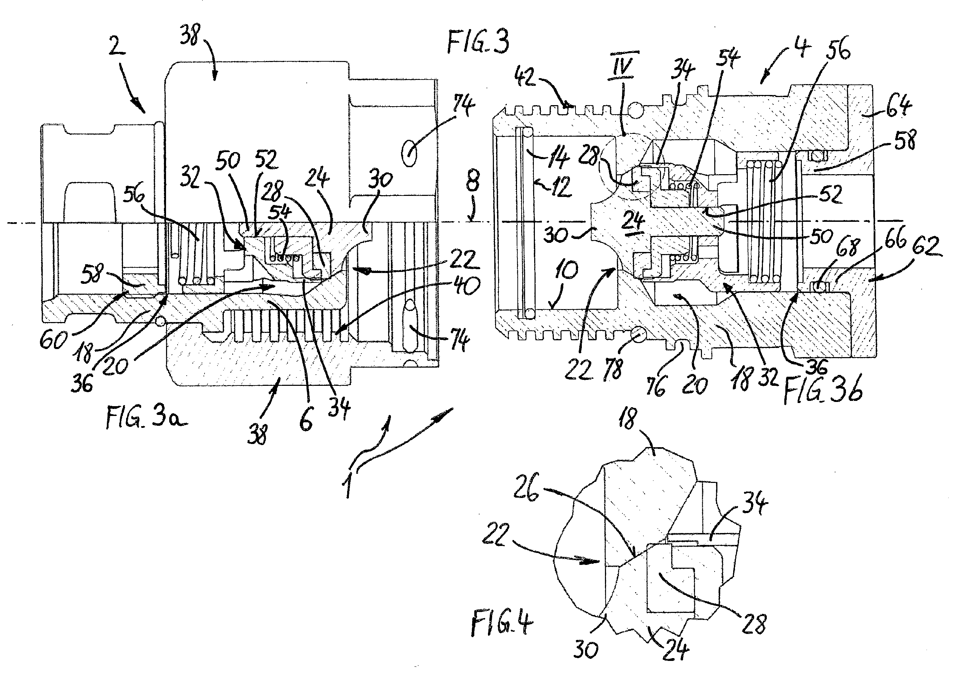

Jedes der beiden Kupplungsteile 2, 4 weist innerhalb eines Gehäuses 18 und eines sich durch das Gehäuse 18 erstreckenden Strömungskanals 20 ein Schließventil 22 mit einer durch Federkraft erzeugten Schließlage auf. Jedes Schließventil 22 besteht aus einem axial beweglichen Ventilkörper 24 und einem gehäuseseitigen, eine Strömungsöffnung umschließenden Ventilsitz 26. Jeder Ventilkörper 24 ist als Ventilkegel ausgebildet, und jeder Ventilsitz 26 ist als entsprechend konische Innenfläche ausgeführt. Hierbei ist jeder Ventilkörper 24 im Dichtungsbereich mit einer elastischen Ringdichtung 28 ausgestattet, die in einer entsprechenden Dichtungskammer gehalten ist. In der Schließlage kommt die jeweilige Ringdichtung 28 in eine dichtende Anlage innerhalb des zugehörigen Ventilsitzes 26. Dazu wird insbesondere auf Fig. 3b und Fig. 4 verwiesen.

Die Schließventile 22 der beiden Kupplungsteile 2, 4 sind innerhalb der Gehäuse 18 so angeordnet und ausgerichtet, dass sich beim Steckkuppeln der Kupplungsteile 2, 4 deren Ventilkörper 24 axial gegenüberliegen und beim Zusammenstecken derart über axiale Ansätze 30 zur Anlage aneinander gelangen, dass sich die Schließventile 22 beim Kuppeln selbsttätig gegenseitig öffnen, indem beim axialen Zusammenführen der beiden Gehäuse 18 die Ventilkörper 24 aus ihren Schließlagen gegen die Federkraft axial in das jeweilige Gehäuse 18 hinein in eine die jeweilige Strömungsöffnung des Strömungskanals 20 öffnende Öffnungslage verschoben werden. Diese Öffnungslage ist in den Fig. 1, 2, 7 und 8 sowie 12 und 13 jeweils veranschaulicht.

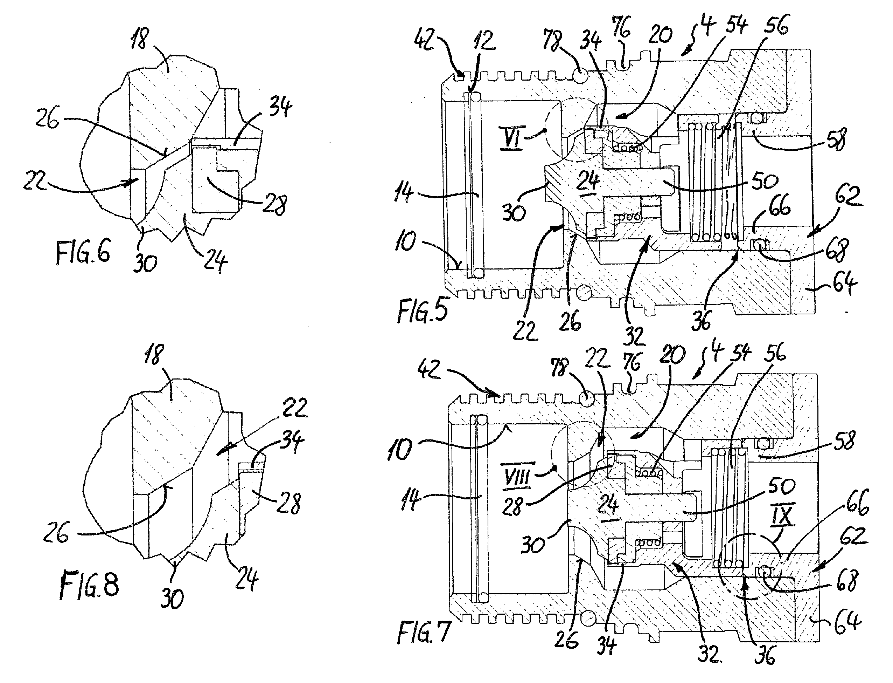

Es kann vorgesehen sein, dass innerhalb jedes der beiden Kupplungsteile 2, 4 ein Dichtungsschutzelement 32 derart angeordnet ist, dass beim Öffnen des Schließventils 22 zunächst in einem ersten Öffnungshub der Ventilkörper 24 relativ zu dem Dichtungsschutzelement 32 verschoben wird (siehe dazu den Übergang von Fig. 4 zu Fig. 6), bis die Ringdichtung 28 von einem Hülsenabschnitt 34 des Dichtungsschutzelementes 32 umfangsgemäß überdeckt ist. Erst dann wird in einem zweiten Öffnungshub (siehe den Übergang von Fig. 6 zu Fig. 8) durch gemeinsame Verschiebung des Ventilkörpers 24 zusammen mit dem Dichtungsschutzelement 32 das Schließventil 22 geöffnet. Außerdem ist dabei erfindungsgemäß vorgesehen, dass in der verriegelten Kupplungslage der Kupplungsteile 2, 4 die über ihre Ansätze 30 aneinanderliegenden Ventilkörper 24 durch innere, die jeweilige Ventilöffnung begrenzende Endanschläge 36 auf ein axiales Bewegungsspiel von maximal 0,4 mm begrenzt sind.

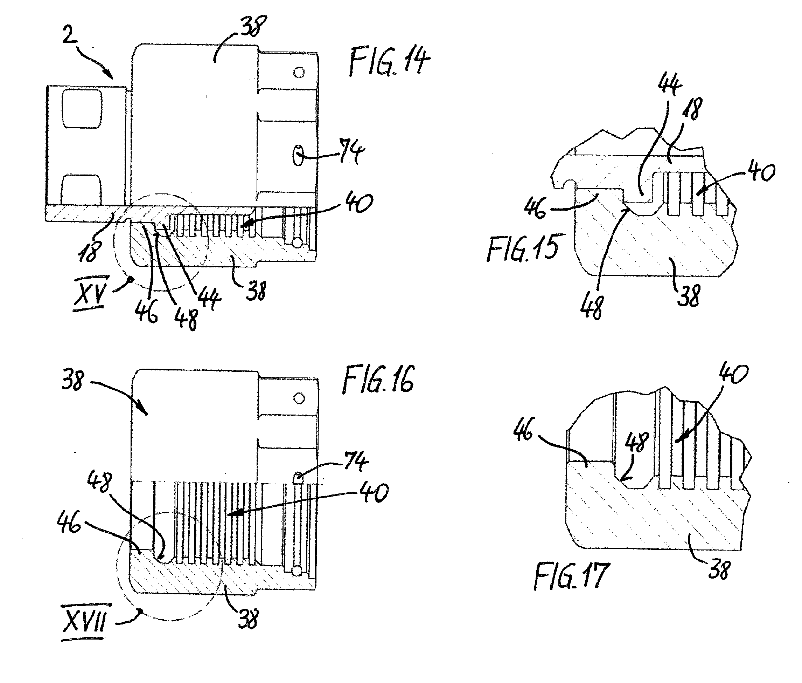

Erfindungsgemäß ist vorgesehen, dass die Verriegelungsmittel 16 als äußere Verschraubung ausgebildet sind, wobei das eine Kupplungsteil, wie dargestellt insbesondere das Steckerteil 2, außen auf seinem Gehäuse 18 eine koaxiale, um die Achse 8 drehbare Überwurf-Schraubhülse 38 trägt, die mit einem Innengewinde 40 auf ein Außengewinde 42 des Gehäuses 18 des anderen Kupplungsteils, insbesondere des Muffenteils 4, aufschraubbar ist. Hierbei sind die Gewinde 40, 42 für eine hohe Tragkraft als Rechteck- oder Trapezgewinde ausgebildet. Außerdem ist gemäß Fig. 14 bis 17 innerhalb der Schraubhülse 38 im Übergang vom Auslauf des Innengewindes 40 zu einem radial nach innen vorspringenden und mit einem Stufenansatz 44 des Gehäuses 18 des Steckerteils 2 zur Krafteinleitung zusammenwirkenden Ringbund 46 ein schräger, konusartiger Verstärkungsbereich 48 gebildet. Durch diese beschriebene Ausgestaltung ist die Verschraubung für eine sehr hohe Haltekraft ausgelegt, so dass die erfindungsgemäße Schnellkupplung 1 für hohe Drücke geeignet ist.

Im Folgenden sollen vorteilhafte Ausgestaltungen der Erfindung erläutert werden.

Die Schließventile 22 der beiden Kupplungsteile 2, 4 sind grundsätzlich gleichartig und in der Kupplungslage nahezu spiegelsymmetrisch ausgebildet, abgesehen von geringfügigen Unterschieden hinsichtlich der effektiven Querschnitte innerhalb der Strömungskanäle 20. Jeder Ventilkörper 24 weist ausgehend von seinem kegelförmigen, die Ringdichtung 28 aufweisenden Bereich auf der dem vorderen Ansatz 30 gegenüberliegenden Seite einen stiftförmigen Führungsansatz 50 auf, der in einer korrespondierenden Führungsöffnung 52 des Dichtungsschutzelementes 32 axial verschiebbar geführt ist. Zwischen jedem Ventilkörper 24 und dem zugehörigen Dichtungsschutzelement 32 ist eine erste Schließfeder 54 angeordnet. Eine zweite Schließfeder 56 ist zwischen dem Dichtungsschutzelement 32 und einem inneren, gehäuseseitigen Widerlager 58 angeordnet. Hierbei ist es für die beschriebene Funktion beim Öffnen der Schließventile 22 wesentlich, dass die erste Schließfeder 54 eine kleinere Federkraft als die zweite Schließfeder 56 erzeugt. Dadurch ist sichergestellt, dass bei der Öffnungsbewegung zunächst die kleinere Federkraft zu überwinden ist, so dass jedenfalls erst der Ventilkörper 24 mit seiner Ringdichtung 28 sich in den Hülsenabschnitt 34 des Dichtungsschutzelementes 32 bewegt, bis anschließend für die eigentliche Ventilöffnung der Ventilkörper 24 zusammen mit dem Dichtungsschutzelement 32 gegen die höhere Federkraft der zweiten Schließfeder 56 verschoben wird, und zwar bis in die Endanschlagstellung.

Wie beispielhaft nur in Fig. 2 und 13 eingezeichnet ist, besteht jedes Dichtungsschutzelement 32 aus einem den Hülsenabschnitt 34 aufweisenden, vorderen Aufnahmeabschnitt 32a für den Ventilkörper 24 und einem hinteren, sich in Öffnungsrichtung anschließenden, ringförmigen und verschiebbar innerhalb des Gehäuses 18 geführten Führungsabschnitt 32b. Im Übergang zwischen dem Aufnahmeabschnitt 32a und dem Führungsabschnitt 32b sind geeignete Strömungsöffnungen für das Hydraulikmedium gebildet (nicht bezeichnet).

Wie sich aus Fig. 3b und 4 ergibt, liegt innerhalb jedes Kupplungsteils 2, 4 in der Ventil-Schließstellung der Hülsenabschnitt 34 des Dichtungsschutzelementes 32 mit einem freien vorderen Stirnringbereich in einem direkt hinter der Ringdichtung 28 liegenden Bereich des Ventilsitzes 26 an, wobei beim Kuppelvorgang - siehe dazu Fig. 6 bis 8 - der Hülsenabschnitt 34 erst dann von dem Bereich des Ventilsitzes 26 abhebt und somit erst dann das Ventil öffnet, wenn die Ringdichtung 28 sich von ihrer Dichtlage auf dem Ventilsitz 26 ganz in den Hülsenabschnitt 34 hinein bewegt hat. Dadurch ist jede Ringdichtung 28 umschlossen und gekammert, bevor eine Hydraulikströmung innerhalb der Kupplungen auftreten kann.

Bei der in Fig. 12 und 13 veranschaulichten Ausführung der Schnellkupplung 1 ist der erfindungsgemäße innere Endanschlag 36 jedes der beiden Kupplungsteile 2, 4 von einem innerhalb des Gehäuses 18 derart axial verstellbar geführten Anschlagelement 60 gebildet, dass bezüglich der jeweiligen Öffnungsstellung das axiale Bewegungsspiel des Ventilkörpers 24 auf Null einstellbar, d. h. kalibrierbar ist. Dabei bildet jedes Anschlagelement 60 gleichzeitig auch das Widerlager 58 für die zweite Schließfeder 56. Bevorzugt ist jedes Anschlagelement 60 als ringförmiges Einschraubteil ausgebildet, welches für seine axiale Einstellbarkeit mit einem Außengewinde in ein Innengewinde des Gehäuses 18 eingreift. Bei dieser Ausführung kann somit durch die zwei gegenüberliegenden, einstellbaren Anschlagelemente 60 das gemeinsame Bewegungsspiel beider Ventilkörper 24 für die gekuppelte Stellung genau auf Null eingestellt werden, so dass die Ventilkörper 24 fest in einer Blockstellung gehalten werden.

Bei der alternativen Ausführungsform, wie sie in den Fig. 1 bis 3 veranschaulicht ist, ist das Steckerteil 2 ebenfalls mit dem bereits beschriebenen verstellbaren Anschlagelement 60 ausgestattet. Allerdings ist der Endanschlag 36 des Muffenteils 4 von einem festen, starr mit dem Gehäuse 18 verbundenen Anschlagelement 62 gebildet. Beispielsweise besteht dieses Anschlagelement 62 aus einem Flanschteil 64 mit einem axialen, in das Gehäuse 18 eingreifenden Rohrstutzen 66, der über eine Dichtung 68 innerhalb des Gehäuses 18 abgedichtet ist. Hierbei bildet der Rohrstutzen 66 gleichzeitig auch das Widerlager 58 für die Schließfeder 56.

Bei dieser Ausführung mit dem starr und nicht einstellbar befestigten Anschlagelement muss durch Herstellungstoleranzen sichergestellt werden, dass das Bewegungsspiel der Ventilkörper 24 in der Kupplungslage jedenfalls ≤ 0,4 mm ist.

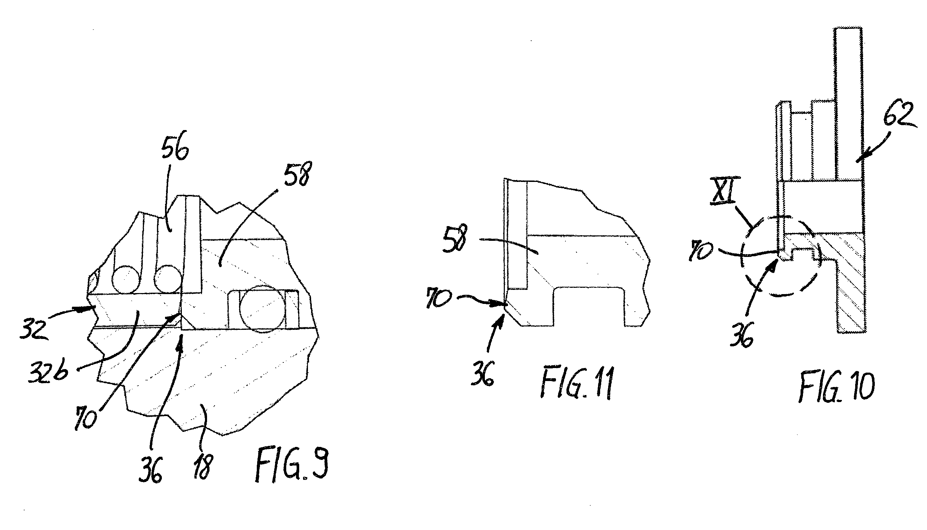

Allerdings kann in einer vorteilhaften Ausgestaltung vorgesehen sein, dass im Anschlagbereich zwischen dem festen Anschlagelement 62 und dem Dichtungsschutzelement 32 bzw. dessen hinterem Führungsabschnitt 32b eine derart plastisch verformte bzw. verformbare Ausgleichszone 70 vorgesehen ist, dass durch einen ersten Kupplungsvorgang ein zunächst vorhandenes axiales Übermaß durch eine Stauchverformung im Bereich der Ausgleichszone 70 auf eine Ventil-Bockstellung mit einem axialen Bewegungsspiel gleich Null reduziert bzw. reduzierbar ist. Zu dieser erfindungsgemäßen Ausgestaltung wird auf die Darstellungen in Fig. 9 bis 11 verwiesen. Demnach kann das Anschlagelement 62 im vorderen, den Endanschlag 36 bildenden Endbereich des Rohrstutzens 66 eine zunächst dachförmige Kontur aufweisen (siehe Fig. 11), die dann gemäß Fig. 9 beim Kuppeln durch Anlage des Führungsabschnittes 32b des Dichtungsschutzelementes 32 zwangsweise verformt wird und/oder sich in den Führungsabschnitt 32b hinein drückt.

In vorteilhafter Ausgestaltung der äußeren Verschraubung ist vorgesehen, dass die Schraubhülse 38 in ihrer verschraubten Verriegelungsstellung mit einem Sicherungselement 72 gegen Lösen arretierbar ist. Dieses Sicherungselement 72 kann mit Vorteil von einem Splint oder dergleichen Sicherungsstift gebildet sein, der durch Queröffnungen 74 der Schraubhülse 38 und tangential durch eine Sicherungsnut 76 des Gehäuses 18 des Muffenteils 4 eingeführt und insbesondere durch Federkraft gehalten wird.

Weiterhin ist bevorzugt in einem Ringspalt zwischen der Schraubhülse 38 des Steckerteils 2 und dem Gehäuse 18 des Muffenteils 4 eine Schmutzdichtung 78 angeordnet, die ein Eindringen von Schmutz, wie insbesondere Staub und dergleichen, in den Gewindebereich verhindert.

Durch die beschriebene Ausgestaltung ist die erfindungsgemäße Schnellkupplung 1 vorteilhafterweise als Hochdruckkupplung geeignet.

## Patentansprüche

1. Schnellkupplung (1) für Hydraulik-Druckleitungen, bestehend aus zwei Kupplungsteilen (2, 4), und zwar einem Steckerteil (2) und einem Muffenteil (4), wobei das Steckerteil (2) mit einem Steckerschaft (6) unter umfangsgemäßer Abdichtung in Richtung einer Kupplungsachse (8) in eine Aufnahmeöffnung (10) des Muffenteils (4) einsteckbar ist und die Kupplungsteile (2, 4) in der zusammengesteckten Kupplungslage über Verriegelungsmittel (16) lösbar verriegelbar sind, wobei jedes Kupplungsteil (2, 4) innerhalb eines Gehäuses (18) und eines inneren Strömungskanals (20) ein Schließventil (22) mit einer durch Federkraft erzeugten Schließlage aufweist, wobei jedes Schließventil (22) aus einem axial beweglichen, eine Ringdichtung (28) aufweisenden Ventilkörper (24) und einem gehäuseseitigen, eine Strömungsöffnung umschließenden Ventilsitz (26) für die Ventil-Ringdichtung (28) besteht, und wobei sich beim Kuppeln der Kupplungsteile (2, 4) deren Ventilkörper (24) gegenüberliegen und derart zur Anlage aneinander gelangen, dass sich die Schließventile (22) beim Kuppeln selbsttätig gegenseitig öffnen, indem die Ventilkörper (24) aus ihrer Schließlage gegen die Federkraft axial in das jeweilige Gehäuse (18) hinein in eine die jeweilige Strömungsöffnung öffnende Öffnungslage verschoben werden,
**dadurch gekennzeichnet, dass** die Verriegelungsmittel (16) als äußere Verschraubung ausgebildet sind, wobei das eine Kupplungsteil, insbesondere das Steckerteil (2), eine äußere, drehbare Überwurf-Schraubhülse (38) trägt, die mit einem Innengewinde (40) auf ein Außengewinde (42) des anderen Kupplungsteils, insbesondere des Muffenteils (4), aufschraubbar ist, wobei die Gewinde (40, 42) als Rechteck- oder Trapezgewinde ausgebildet sind, und wobei innerhalb der Schraubhülse (38) im Übergang von dem Innengewinde (40) zu einem radial nach innen vorspringenden und mit einem Stufenansatz (44) des Kupplungsteils (2) zur Krafteinleitung zusammenwirkenden Ringbund (46) ein schräger, konusartiger Verstärkungsbereich (48) gebildet ist.

2. Schnellkupplung nach Anspruch 1,
**dadurch gekennzeichnet, dass** innerhalb jedes der beiden Kupplungsteile (2, 4) ein Dichtungsschutzelement (32) derart angeordnet ist, dass beim Öffnen des Schließventils (22) zunächst in einem ersten Öffnungshub der Ventilkörper (24) relativ zu dem Dichtungsschutzelement (32) verschoben wird, bis die Ringdichtung (28) von einem Hülsenabschnitt (34) des Dichtungsschutzelementes (32) umfangsgemäß überdeckt ist, wobei erst dann in einem zweiten Öffnungshub durch gemeinsame Verschiebung des Ventilkörpers (24) und des Dichtungsschutzelementes (32) das Schließventil (22) geöffnet wird, wobei in der verriegelten Kupplungslage der Kupplungsteile (2, 4) die aneinanderliegenden Ventilkörper (24) durch innere, die jeweilige Ventilöffnung begrenzende Endanschläge (36) auf ein axiales Bewegungsspiel von maximal 0,4 mm begrenzt sind.

3. Schnellkupplung nach Anspruch 2,
**dadurch gekennzeichnet, dass** innerhalb jedes Kupplungsteils (2, 4) der Ventilkörper (24) in seinem die Ringdichtung (28) aufweisenden Bereich kegelförmig ausgebildet ist und einen stiftförmigen, in einer Führungsöffnung (52) des Dichtungsschutzelementes (32) verschiebbar geführten Führungsansatz (50) aufweist.

4. Schnellkupplung nach Anspruch 2 oder 3,
**dadurch gekennzeichnet, dass** innerhalb jedes Kupplungsteils (2, 4) zwischen dem Ventilkörper (24) und dem Dichtungsschutzelement (32) eine erste Schließfeder (54) und zwischen dem Dichtungsschutzelement (32) und einem inneren, gehäuseseitigen Widerlager (58) eine zweite Schließfeder (56) angeordnet sind, wobei die erste Schließfeder (54) eine kleinere Federkraft als die zweite Schließfeder (56) erzeugt.

5. Schnellkupplung nach einem der Ansprüche 2 bis 4,
**dadurch gekennzeichnet, dass** jedes Dichtungsschutzelement (32) aus einem den Hülsenabschnitt (34) aufweisenden, vorderen Aufnahmeabschnitt (32a) für den Ventilkörper (24) und einem hinteren, sich in Öffnungsrichtung anschließenden, verschiebbar innerhalb des Gehäuses (18) geführten Führungsabschnitt (32b) besteht, wobei im Übergang zwischen dem Aufnahmeabschnitt (32a) und dem Führungsabschnitt (32b) Strömungsöffnungen gebildet sind.

6. Schnellkupplung nach einem der Ansprüche 2 bis 5,
**dadurch gekennzeichnet, dass** innerhalb jedes Kupplungsteils (2, 4) in der Ventil-Schließstellung der Hülsenabschnitt (34) des Dichtungsschutzelementes (32) mit einem freien vorderen Stirnringbereich in einem direkt hinter der Ringdichtung (28) liegenden Bereich des Ventilsitzes (26) zur Anlage gelangt, wobei beim Kuppelvorgang der Hülsenabschnitt (34) erst dann von dem Ventilsitz (26) abhebt, wenn die Ringdichtung (28) sich von ihrer Dichtlage auf dem Ventilsitz (26) ganz in den Hülsenabschnitt (34) hinein bewegt hat.

7. Schnellkupplung nach einem der Ansprüche 2 bis 6,
**dadurch gekennzeichnet, dass** der Endanschlag (36) mindestens eines der beiden Kupplungsteile (2, 4) von einem innerhalb des Gehäuses (18) derart axial verstellbar geführten Anschlagelement (60) gebildet ist, dass bezüglich der Öffnungsstellung das axiale Bewegungsspiel des Ventilkörpers (24) auf Null einstellbar ist.

8. Schnellkupplung nach Anspruch 7,
**dadurch gekennzeichnet, dass** das Anschlagelement (60) für seine axiale Einstellbarkeit mit einem Außengewinde in ein Innengewinde des Gehäuses (18) eingreift.

9. Schnellkupplung nach einem der Ansprüche 2 bis 8,
**dadurch gekennzeichnet, dass** der Endanschlag (36) mindestens eines der beiden Kupplungsteile (2, 4) von einem festen, starr mit dem Gehäuse (18) verbundenen Anschlagelement (62) gebildet ist.

10. Schnellkupplung nach Anspruch 9,
**dadurch gekennzeichnet, dass** im Anschlagbereich zwischen dem festen Anschlagelement (62) und dem Dichtungsschutzelement (32) eine derart plastisch verformte oder verformbare Ausgleichszone (70) vorgesehen ist, dass durch einen ersten Kupplungsvorgang ein zunächst vorhandenes axiales Übermaß durch eine Stauchverformung im Bereich der Ausgleichszone (70) auf eine Ventil-Blockstellung mit einem axialen Bewegungsspiel gleich Null reduziert oder reduzierbar ist.

11. Schnellkupplung nach einem der Ansprüche 1 bis 10,
**dadurch gekennzeichnet, dass** die Schraubhülse (38) in der verschraubten Verriegelungsstellung mit einem Sicherungselement (72) gegen Lösen arretierbar ist.

12. Schnellkupplung nach einem der Ansprüche 1 bis 11,
**dadurch gekennzeichnet, dass** in einem Ringspalt zwischen der Schraubhülse (38) des einen Kupplungsteils (2) und dem anderen, das Außengewinde (42) aufweisenden Kupplungsteil (4) eine Schmutzdichtung (78) angeordnet ist.

## Claims

1. A quick coupling (1) for hydraulic pressure lines, consisting of two coupling parts (2, 4), namely a plug part (2) and a socket part (4), wherein the plug part (2) is insertable, with circumferential sealing and in the direction of a coupling axis (8), by means of a plug shaft (6) into a receiving opening (10) of the socket part (4) and the coupling parts (2, 4) are releasably lockable in the put-together coupling position via locking means (16), wherein within a housing (18) and an inner flow channel (20), each coupling part (2, 4) has a closing valve (22) with a closing position produced by spring force, wherein each closing valve (22) is composed of an axially movable valve body (24) with a ring seal (28) and of a valve seat (26), located at the side closest to the housing and surrounding a flow opening, for the valve ring-seal (28), and wherein upon coupling of the coupling parts (2, 4), their valve bodies (24) face one another and come to rest against one another in such a manner that the closing valves (22) automatically mutually open upon coupling in that the valve bodies (24) are axially displaced against the spring force from their closing position into the respective housing (18) into an opening position opening the respective flow opening,
**characterized in that** the locking means (16) are in the form of an external screw connection, wherein one coupling part, in particular the plug part (2), bears an external, rotatable union screw sleeve (38) screwable, with an internal thread (40), onto an external thread (42) of the other coupling part, in particular the socket part (4), wherein the threads (40, 42) are in the form of rectangular or trapezoidal threads, and wherein an oblique, cone-like reinforcement region (48) is formed within the screw sleeve (38), in the transition from the internal thread (40) to a radially inwards projecting ring collar (46) cooperating with a stepped shoulder (44) of the coupling part (2) for application of force.

2. A quick coupling according to claim 1, **characterized in that** within each of the two coupling parts (2, 4), a seal protection element (32) is arranged in such a manner that upon opening of the closing valve (22), the valve body (24) is initially in a first opening stroke displaced relative to the seal protection element (32) until the ring seal (28) is circumferentially covered by a sleeve portion (34) of the seal protection element (32), wherein only then in a second opening stroke is the closing valve (22) opened through joint displacement of the valve body (24) and the seal protection element (32), wherein in the locked coupling position of the coupling parts (2, 4), the contacting valve bodies (24) are limited to an axial motion play of maximum 0.4 mm by inner end stops (36) bounding the respective valve opening.

3. A quick coupling according to claim 2, **characterized in that** within each coupling part (2, 4), the valve body (24) is conical in its region having the ring seal (28) and has a pinshaped guide projection (50) displaceably guided in a guide opening (52) of the seal protection element (32).

4. A quick coupling according to claim 2 or 3, **characterized in that** within each coupling part (2, 4), a first closing spring (54) is arranged between the valve body (24) and the seal protection element (32) and a second closing spring (56) is arranged between the seal protection element (32) and an inner abutment (58) on the side closest to the housing, wherein the first closing spring (54) produces a smaller spring force than the second closing spring (56).

5. A quick coupling according to any one of claims 2 to 4, **characterized in that** each seal protection element (32) is composed of a front receiving portion (32a), having the sleeve portion (34), for the valve body (24) and of a rear guide portion (32b) adjoining in the opening direction and displaceably guided within the housing (18), wherein flow openings are formed in the transition between the receiving portion (32a) and the guide portion (32b).

6. A quick coupling according to any one of claims 2 to 5, **characterized in that** within each coupling part (2, 4), in the valve closing position, the sleeve portion (34) of the seal protection element (32) comes into contact, with a free, front end ring region, in a region, lying directly behind the ring seal (28), of the valve seat (26), wherein during the coupling procedure, the sleeve portion (34) only lifts off from the valve seat (26) when the ring seal (28) has moved totally into the sleeve portion (34) from its sealing position on the valve seat (26).

7. A quick coupling according to any one of claims 2 to 6, **characterized in that** the end stop (36) of at least one of the two coupling parts (2, 4) is formed by a stop element (60) axially displaceably guided within the housing (18) in such a manner that the axial motion play of the valve body (24) is adjustable to zero with reference to the opening position.

8. A quick coupling according to claim 7, **characterized in that** for its axial adjustability, the stop element (60) engages an internal thread of the housing (18) with an external thread.

9. A quick coupling according to any one of claims 2 to 8, **characterized in that** the end stop (36) of at least one of the two coupling parts (2, 4) is formed by a fixed stop element (62) rigidly connected to the housing (18).

10. A quick coupling according to claim 9, **characterized in that** in the stop region between the fixed stop element (62) and the seal protection element (32) there is provided a compensating zone (70) plastically deformed or deformable in such a manner that through a first coupling procedure an initially present axial oversize is reduced or reducible through a compression deformation in the region of the compensating zone (70) to a valve blocking position with an axial motion play equal to zero.

11. A quick coupling according to any one of claims 1 to 10, **characterized in that** the screw sleeve (38) can in the screwed locking position be locked against release by means of a securing element (72).

12. A quick coupling according to any one of claims 1 to 11, **characterized in that** a dirt seal (78) is arranged in an annular gap between the screw sleeve (38) of one coupling part (2) and the other coupling part (4) with the external thread (42).

## Revendications

1. Raccord rapide (1) pour conduites hydrauliques sous pression, constitué de deux éléments de raccordement (2, 4), à savoir d'un élément formant fiche (2) et d'un élément formant manchon (4), l'élément formant fiche (2) pouvant être engagé avec un embout de fiche (6) dans une ouverture d'insertion (10) de l'élément formant manchon (4), avec une étanchéité périphérique, dans le sens d'un axe de raccord (8), et les éléments de raccordement (2, 4), dans la position de raccordement emboîtée, étant verrouillés de façon libérable par l'intermédiaire de moyens de verrouillage (16), chaque élément de raccordement (2, 4) présentant, à l'intérieur d'une enveloppe (18) et d'un canal d'écoulement (20) interne, une soupape de fermeture (22) avec une position de fermeture établie par la force d'un ressort, sachant que chaque soupape de fermeture (22) est constituée d'un corps de soupape (24), déplaçable axialement et présentant un joint annulaire (28), et d'un siège de soupape (26), situé côté enveloppe et entourant un orifice d'écoulement, pour le joint annulaire (28) de soupape, et que lors du raccordement des éléments de raccordement (2, 4), leurs corps de soupape (24) se font face et viennent en appui l'un contre l'autre de telle manière que les soupapes de fermeture (22) s'ouvrent mutuellement de façon automatique lors du raccordement, par le fait que les corps de soupape (24) sont déplacés à partir de leur position de fermeture, à l'encontre de la force du ressort, axialement dans l'enveloppe (18) respective, dans une position d'ouverture ouvrant l'orifice d'écoulement respectif,
**caractérisé en ce que** les moyens de verrouillage (16) sont réalisés sous la forme d'un raccord à vis extérieur, l'un des éléments de raccordement, en particulier l'élément formant fiche (2), portant une douille-raccord à vis (38) rotative extérieure qui peut être vissée avec un filetage femelle (40) sur un filetage mâle (42) de l'autre élément de raccordement, en particulier de l'élément formant manchon (4), les filetages (40, 42) étant réalisés comme filetages rectangulaires ou trapézoïdaux,
et une zone de renfort (48) conique oblique étant formée à l'intérieur de la douille à vis (38), à la transition du filetage femelle (40) vers un collet annulaire (46) faisant saillie radialement vers l'intérieur et coopérant avec un épaulement (44) de l'élément de raccordement (2), en vue de l'application des forces.

2. Raccord rapide selon la revendication 1, **caractérisé en ce qu'**il est prévu, à l'intérieur de chacun des deux éléments de raccordement (2, 4), un élément de protection de joint (32), de telle manière que lors de l'ouverture de la soupape de fermeture (22), le corps de soupape (24) soit d'abord déplacé par rapport à l'élément de protection de joint (32) pendant une première course d'ouverture, jusqu'à ce que le joint annulaire (28) soit recouvert sur la périphérie par une portion formant manchon (34) de l'élément de protection de joint (28), et seulement ensuite, pendant une deuxième course d'ouverture, la soupape de fermeture (22) soit ouverte par un déplacement commun du corps de soupape (24) et de l'élément de protection de joint (32), sachant que dans la position de raccordement verrouillée des éléments de raccordement, les corps de soupape (24) appliqués l'un contre l'autre sont limités à un jeu de mouvement axial d'au maximum 0,4 mm par des butées de fin de course (36) délimitant l'ouverture de soupape respective.

3. Raccord rapide selon la revendication 2, **caractérisé en ce que**, à l'intérieur de chaque élément de raccordement (2, 4), le corps de soupape (24) est conformé en cône, dans sa région présentant le joint annulaire (28), et présente un embout de guidage (50) en forme de tige qui est guidé de façon déplaçable dans une ouverture de guidage (52) de l'élément de protection de joint (32).

4. Raccord rapide selon la revendication 2 ou 3, **caractérisé en ce que**, à l'intérieur de chaque élément de raccordement (2, 4), un premier ressort de fermeture (54) est disposé entre le corps de soupape (24) et l'élément de protection de joint (32), et un deuxième ressort de fermeture (56) est disposé entre l'élément de protection de joint (32) et un élément de contre-appui (58) interne, situé côté enveloppe, le premier ressort de fermeture (54) exerçant une force élastique plus faible que le deuxième ressort de fermeture (56).

5. Raccord rapide selon l'une des revendications 2 à 4, **caractérisé en ce que** chaque élément de protection de joint (32) est constitué d'une portion d'insertion (32a) avant, comportant la portion formant manchon (34), pour le corps de soupape (24) et d'une portion de guidage (32b) arrière, se raccordant dans le sens de l'ouverture et guidée de façon déplaçable dans l'enveloppe (18), des orifices d'écoulement étant formés dans la transition entre la portion d'insertion (32a) et la portion de guidage (32b).

6. Raccord rapide selon l'une des revendications 2 à 5, **caractérisé en ce que**, à l'intérieur de chaque élément de raccordement (2, 4), dans la position de fermeture de la soupape, la portion formant manchon (34) de l'élément de protection de joint (32) vient en appui, avec une zone annulaire frontale avant libre, dans une région du siège de soupape (26) située directement derrière le joint annulaire (28), sachant que lors de l'opération de raccordement, la portion formant manchon (34) ne se sépare du siège de soupape (26) que lorsque le joint annulaire (28) est rentré complètement dans la portion formant manchon (34) à partir de sa position d'étanchéité sur le siège de soupape (26).

7. Raccord rapide selon l'une des revendications 2 à 6, **caractérisé en ce que** la butée de fin de course (36) d'au moins un des deux éléments de raccordement (2, 4) est constituée d'un élément de butée (60) qui est guidé à l'intérieur de l'enveloppe (18) avec possibilité de déplacement axial tel que le jeu de déplacement axial du corps de soupape (24) puisse être réglé à zéro par rapport à la position d'ouverture.

8. Raccord rapide selon la revendication 7, **caractérisé en ce que** l'élément de butée (60), en vue de sa possibilité de réglage axial, s'engage avec un filetage mâle dans un filetage femelle de l'enveloppe (18).

9. Raccord rapide selon l'une des revendications 2 à 8, **caractérisé en ce que** la butée de fin de course (36) d'au moins un des deux éléments de raccordement (2, 4) est constituée d'un élément de butée (62) fixe, relié de façon rigide à l'enveloppe (18).

10. Raccord rapide selon la revendication 9, **caractérisé en ce qu'**est prévue dans la zone de butée entre l'élément de butée (62) fixe et l'élément de protection de joint (32), une zone de compensation (70) qui est déformée ou déformable plastiquement de façon telle qu'une première opération de raccordement réduise ou permette de réduire, par déformation par refoulement dans la région de la zone de compensation (70), une surcote axiale d'abord existante, jusqu'à une position de blocage de soupape avec un jeu de déplacement axial égal à zéro.

11. Raccord rapide selon l'une des revendications 1 à 10, **caractérisé en ce que** dans la position de verrouillage vissée, la douille à vis (38) peut être bloquée par un élément d'arrêt (72) pour empêcher son desserrage.

12. Raccord rapide selon l'une des revendications 1 à 11, **caractérisé en ce qu'**un joint antisalissure (78) est disposé dans un espace annulaire entre la douille à vis (38) de l'un des éléments de raccordement (2) et l'autre élément de raccordement (4) présentant le filetage mâle (42).
